# EUROPÄISCHE PATENTSCHRIFT

(11) **EP 3 637 066 B1**
(45) Veröffentlichungstag und Bekanntmachung des Hinweises auf die Patenterteilung: **02.11.2022**
(21) Anmeldenummer: 19200497.6
(22) Anmeldetag: 30.09.2019
(51) Int. Cl.: G01G 19/02, E02F 9/26

(54) **LANDWIRTSCHAFTLICHES TRANSPORTFAHRZEUG MIT WIEGESYSTEM**
AGRICULTURAL TRANSPORT VEHICLE WITH WEIGHING SYSTEM
VÉHICULE DE TRANSPORT AGRICOLE POURVU DE SYSTÈME DE PESAGE

(30) Priorität: 10.10.2018 DE 202018105801 U
(43) Veröffentlichungstag der Anmeldung: 15.04.2020
(73) Patentinhaber: Trioliet B.V., 7575 BE Oldenzaal (NL)
(72) Erfinder: LIET, Robert Jan, 7573 CS Oldenzaal (NL)
(74) Vertreter: Grünecker Patent- und Rechtsanwälte PartG mbB

(56) Entgegenhaltungen:
- CN-A- 107 314 803
- US-A1- 2009 139 119
- US-B1- 6 313 414

## Beschreibung

### Gebiet der Erfindung

Die vorliegende Erfindung betrifft einen Futtermischwagen mit einer Wiegevorrichtung zum Erfassen des Gewichts von Ladegut in einem Laderaum.

### Stand der Technik

Transportfahrzeuge werden in der Landwirtschaft auf vielfältige Weise eingesetzt, beispielsweise um Schüttgüter, wie zum Beispiel Viehfutter, Erntegut, oder dergleichen, zu transportieren. Dabei werden sowohl selbst fahrende als auch geführte, d.h. gezogene oder geschobene Transportfahrzeuge eingesetzt. In vielen Bereichen ist es wünschenswert, das Ladegut bereits im Laderaum des Transportfahrzeugs zu wiegen. Dies ist insbesondere während eines Ladevorgangs mit dem Ladegut sowie während eines Entladevorgangs, beispielsweise des Ausbringens von Ladegut auf einer landwirtschaftlichen Fläche oder an Nutzvieh, mit hoher Präzision erforderlich.

In der Vergangenheit wurde das Fassungsvermögen von Futtermischwagen, in denen Viehfutter aus mehreren Komponenten zusammen- und bereitgestellt wird, wegen steigender Viehbestände immer größer. Dennoch ist es erforderlich, dass die mit neueren Futtermischwagen eingesetzten Wiegesysteme die transportierte Futtermischung möglichst genau wiegen.

Dies ist einerseits beim Beladen des Laderaums mit den einzelnen Komponenten der Futtermischung erforderlich, um eine möglichst genaue Zusammensetzung der Futtermischung zu erzielen. Im Allgemeinen ist in Abhängigkeit von dem zu versorgenden Nutzvieh eine bestimmte Rezeptur aus Raufutter, beispielsweise Gras oder Heu oder Mais oder einem anderen kostengünstigen Nährstoff, und teurem Kraftfutter und/oder anderen Nebenprodukten, zum Beispiel Biertreber, Rübengeschnetzeltem oder dergleichen, für die optimale Futtermischung in einem Mischbehälter, insbesondere einem Laderaum des Transportfahrzeugs, herzustellen. Beispielsweise reicht für trockenes Milchvieh oder Jungtiere Futter etwas minderer Qualität aus, während für hochproduktives Milchvieh eine hohe Futterqualität benötigt wird.

Dies ist umgekehrt auch bei einer Ausdosierung von Futter nach einem vorprogrammierten Ablauf aus dem Laderaum, beispielsweise über entsprechende Ausbringöffnungen des Laderaums, insbesondere in der Art eines nach oben verstellbaren Verschluss-Schiebers, zu beachten. In modernen Betrieben erfolgt die Versorgung des Viehbestands durch Vorbeifahrt an den nach den individuellen Futterbedürfnissen angeordneten Viehgruppen, wobei die gewünschte Art und Menge von Viehfutter vorprogrammiert aus dem oder den Laderäumen des landwirtschaftlichen Transportfahrzeugs ausgebracht und verteilt werden sollen. Hierzu weisen landwirtschaftliche Transportfahrzeuge, insbesondere Futtermischwagen, im Allgemeinen Wiegesysteme mit einem Bildschirm auf, auf dem das verbleibende und/oder bereits ausgebrachte Gewicht der Futtermischung während der Vorbeifahrt angezeigt wird. Auf diese Weise kann der Fahrer stets erkennen, wieviel Futter einer bestimmten Futtermischung noch an eine bestimmte Viehgruppe zu verfüttern ist. Erreicht diese Anzeige Null oder eine andere Grenze, geht der programmierte Fütterungsprozess zur nächsten Viehgruppe über, wobei die benötigte Futtermenge für diese nächste Viehgruppe angezeigt wird.

Heutige Futtermischwagen weisen Fassungsvermögen von beispielsweise 36 bis 52 m³ bzw. 30 bis 45 t auf. Aufgrund von Unebenheiten des Bodens bzw. der Fahrbahn sowie Erschütterungen beim Ladevorgang kommt es zu Beschleunigungen, Sprüngen und Schwingungen des Transportfahrzeugs, die das von dem Wiegesystem bestimmte Gewicht verfälschen. Je nach eingesetztem Wiegesystem wirken sich auch die Neigung des Bodens bzw. der Fahrbahn, Seitenwinde, Drehmomente beim Anfahren bzw. Abbremsen des Transportfahrzeugs, Temperatureinflüsse, sowie Änderungen der Fahrtrichtung und Geschwindigkeit negativ auf die Präzision des Messergebnisses der Wiegesysteme aus. Bei den genannten Futtermischwagen können diese Einflüsse leicht zu Abweichungen von 50 bis 400 kg führen. Als Ergebnis wird eine ungenaue Futtermenge an die jeweiligen Viehgruppen ausgegeben, die aufwändig von Hand korrigiert werden muss, um negative Entwicklungen des Nutzviehs zu vermeiden. Beispielsweise findet die programmierte Weiterschaltung von einer Viehgruppe zur nächsten zu früh oder zu spät statt. Als Ergebnis ist es bei heutigen Futtermischwagen häufig erforderlich, nach Ausbringen eines Teils der Futtermischung anzuhalten, damit das Wiegesystem ausbalanciert werden kann. Dies ist jedoch aufwändig und verzögert den Gesamtvorgang.

Ebenso ist es beim vorprogrammierten Beladen eines Futtermischwagens mit verschiedenen Futterkomponenten erforderlich, das Gewicht des geladenen Futters genau zu bestimmen. Ein vorprogrammierter Ladevorgang umfasst beispielsweise die Übernahme der Futterkomponenten von einem oder mehreren Futtersilos, wobei das übernommene Futter im Allgemeinen von oben in den Mischbehälter fällt. Alternativ kann ein eigenständiges Fördermittel wie eine Ladegabel oder ein Ladearm bzw. eine Ladeschaufel zum Beladen des Mischbehälters von oben eingesetzt werden. In jedem Fall entstehen auch hier Beschleunigungen und Schwingungen des Mischbehälters bzw. Transportfahrzeugs, die die Bestimmung des Gewichts des geladenen Futters verfälschen. Um eine falsche Zusammensetzung der Futtermischung zu vermeiden, ist es daher häufig erforderlich, vor einem Wechsel zur nächsten Futterkomponente ein Abklingen der Schwingungen des Transportfahrzeugs abzuwarten. Diese negativen Einflüsse sind auch bei stationären Mischbehältern, in denen die Futtermischungen zusammengestellt werden, von Bedeutung. Um die Ladezeit zu verkürzen und fehlerhafte Zusammensetzungen der Futtermischung zu vermeiden, ist es daher wünschenswert, das Gewicht der eingefüllten Futterkomponenten schnell und mit hoher Präzision zu bestimmen.

Der vorliegenden Erfindung liegt somit die Aufgabe zugrunde, ein Wiegesystem für landwirtschaftliche Transportfahrzeuge zur Verfügung zu stellen, dass unabhängig von verfälschenden Einflüssen wie Beschleunigungen, Schwingungen und Bodenneigungen ein möglichst präzises Wiegeergebnis liefert. Ebenso sollen landwirtschaftliche Transportfahrzeuge zur Verfügung gestellt werden, die das Gewicht von Ladegut in einem Laderaum präzise und zuverlässig erfassen können. Ganz allgemein liegt der vorliegenden Erfindung die Aufgabe zugrunde, Ladevorgänge und Entnahmevorgänge landwirtschaftlicher Transportfahrzeuge zu vereinfachen und zu beschleunigen.

Aus CN 107314803 A ist ferner ein Wiegesystem für ein landwirtschafliches Fahrzeug bekannt, umfassend eine Wiegeeinheit und darin jeweils intergriert: einen Wiegesensor; eine inertiale Messeinheit zum Messen einer Beschleunigung und einer Orientierung der Wiegeeinheit; und eine Recheneinheit, die dazu ausgebildet ist, Rohsignale des Wiegesensors mit Ausgangssignalen der inertialen Messeinheit zu kombinieren, um durch Beschleunigung und Neigung der Wiegeeinheit verursachte verfälschende Einflüsse auf gemessene Gewichtssignale zu kompensieren.

### Beschreibung der Erfindung

Die oben genannten Aufgaben werden gelöst durch einen Futtermischwagen nach Anspruch 1, nachfolgend auch landwirtschaftliches Transportfahrzeug genannt, mit wenigstens einem Laderaum für landwirtschaftliche Schüttgüter und mehreren Wiegevorrichtungen, Wägezellen und/oder Wiegestäben, zum Erfassen des Gewichts von Ladegut in dem Laderaum, wobei wenigstens eine inertiale Messeinheit zum Messen einer Beschleunigung und/oder Orientierung des landwirtschaftlichen Transportfahrzeugs, insbesondere des Laderaums, und wenigstens eine Recheneinheit vorgesehen sind, die dazu ausgebildet ist, mehrere Rohsignale mehrerer der Wiegevorrichtungen mit den Ausgangssignalen der wenigstens einen inertialen Messeinheit zu kombinieren, um verfälschende Einflüss auf die gemessenen Gewichtssignale durch Beschleunigungen, Schwingungen und Neigungen des Futtermischwagens zu kompensieren.

Neben den erwähnten Futtermischwagen umfasst die vorliegende Offenbarung außerhalb der Erfindung auch jegliche weitere Art landwirtschaftlicher Transportfahrzeuge, beispielsweise solche mit einem festen Laderaumaufbau, der von oben, von hinten und/oder von der Seite beladen werden kann, und entsprechend durch eine heckseitige Entladeöffnung, durch eine oder mehrere Bodenöffnungen und/oder durch eine oder mehrere seitlich angeordnete Ausbringöffnungen entladen werden kann. Das Transportfahrzeug kann selbst fahrend ausgebildet sein oder von einem angetriebenen Fahrzeug, beispielsweise einem Schlepper, gezogen oder geschoben werden. Ein selbst fahrendes Transportfahrzeug kann insbesondere als autonom fahrendes Fahrzeug, d. h. ohne Fahrer bzw. Bediener, ausgebildet sein, und somit ein Roboter sein. Das autonom fahrende Transportfahrzeug kann dabei Beladevorgänge, Mischvorgänge und Füttervorgänge automatisch durchführen. Das Transportfahrzeug kann eine eigene Ladeeinrichtung, beispielsweise einen Schaufel- oder Frontlader, zum Beladen mit Ladegut aufweisen. Es kann einachsig oder mehrachsig ausgebildet sein. Über die eine oder mehreren Achsen und die damit verbundenen Räder kann das Transportfahrzeug zum Erdboden hin durch einen Fahrgestellrahmen zur Aufnahme wenigstens eines Laderaums abgestützt sein. Es können zwei oder mehr Laderäume auf dem Fahrgestellrahmen angeordnet sein.

Wie erwähnt ist der wenigstens eine Laderaum insbesondere für landwirtschaftliche Schüttgüter, wie beispielsweise Viehfutter, sowie Erntegut, insbesondere gehäckseltes oder körniges Erntegut, ausgebildet.

Erfindungsgemäß weist das landwirtschaftliche Transportfahrzeug mehrere Wiegevorrichtungen zum Erfassen des Gewichts von Ladegut in dem oder den Laderäumen auf. Insbesondere kann jedem Laderaum eine eigene Wiegevorrichtung zugeordnet sein. Die Wiegevorrichtung kann insbesondere als Wägezelle oder Wiegestab ausgebildet sein. Wägezellen und Wiegestäbe sind allgemein gut bekannt, sodass hier auf eine detaillierte Beschreibung verzichtet wird. Wägezellen sind dazu ausgebildet, eine Krafteinwirkung zur Bestimmung einer Gewichtskraft zu messen. In der üblichen Bauform bestimmen Wägezellen die wirkende Gewichtskraft über eine Verformung, insbesondere durch Dehnung. Eine spezielle Weiterbildung solcher Wägezellen ist durch den an sich gut bekannten Wiegestab gegeben. Hier wird die Verformung eines massiven, stabförmigen Körpers, üblicherweise aus Metall, mittels eines oder mehrerer Dehnungsmessstreifen bei Belastung des Wiegestabs erfasst. Wiegestäbe können beispielsweise als sogenannte Feder- oder Biegebalken ausgeführt sein. Ein Dehnungsmessstreifen kann oben und/oder unten am Wiegestab angebracht sein. Bei sogenannten Scherbalken ist der Dehnungsmessstreifen an einer Stelle auf oder so nah wie möglich an der Mittelachse des Wiegestabs angeordnet. Wiegestäbe müssen nicht zwingend lineare ausgebildet sein, sondern können auch andere Formen annehmen, beispielsweise s- förmig ausgebildet sein. Des Weiteren sind Wägezellen bekannt, die eine einwirkende Kraft piezoelektrisch, hydraulisch und/oder pneumatisch erfassen. Des Weiteren sind sogenannte Druckwägezellen bekannt, bei denen ein blockförmiger oder zylindrischer Festkörper als Messkörper eingesetzt wird. Die Wägezellen und Wiegestäbe können dabei je nach Anforderung bezüglich des maximal zu erfassenden Gewichts sowie der Anordnung an dem Transportfahrzeug, insbesondere dem Laderaum bzw. Fahrgestell des Transportfahrzeugs, gewählt werden.

Die Wiegevorrichtung ist dabei derart an dem landwirtschaftlichen Transportfahrzeug angeordnet, dass sie zumindest einen Teil des Gewichts des Ladeguts in einem Laderaum erfasst. Dabei ist die Wiegevorrichtung dazu ausgebildet, die erfasste Gewichtskraft in Form eines elektrischen Signals auszugeben, dass hier und im Folgenden als Rohsignal der Wiegevorrichtung bezeichnet wird. Dabei schließt der Begriff Rohsignal nicht aus, dass die Wiegevorrichtung an dem Messsignal elektrische und/oder elektronische Verarbeitungsprozesse vornimmt. Diese können beispielsweise eine Verstärkung, Filterung und/oder Glättung des Messsignals umfassen. Zur Durchführung der genannten Bearbeitungsprozesse kann die Wiegevorrichtung an sich bekannte Komponenten wie Verstärker oder Signalprozessoren aufweisen. Gemäß einer speziellen Weiterbildung kann das Rohsignal jedoch insbesondere ohne Filterung oder Glättung von der Wiegevorrichtung ausgegeben werden. Das Rohsignal einer Wiegevorrichtung umfasst hier und im Folgenden jedoch stets lediglich die von dieser Wiegevorrichtung erfassten Messsignale und ist somit auf die von der speziellen Wiegevorrichtung erfasste Gewichtskraft beschränkt.

Die Wiegevorrichtung kann an einem oder mehreren Auflagepunkten des Laderaums an dem Fahrgestell und/oder einer oder mehreren Achsaufhängungen vorgesehen sein. Sind beispielsweise beidseitig des Transportfahrzeugs Achsaufhängungen vorgesehen, so können auf beiden Seiten des Transportfahrzeugs an sich entsprechenden Stellen Wiegevorrichtungen vorgesehen sein. Des Weiteren kann eine Wiegevorrichtung im Bereich des Schwerpunktes des Transportfahrzeugs und/oder an einer Anhängevorrichtung, beispielsweise einer Deichsel, des Transportfahrzeugs angeordnet sein. Insbesondere können ausreichend viele Wiegevorrichtungen vorgesehen sein und an geeigneten Stellen angeordnet sein, dass mittels der Wiegevorrichtungen das gesamte Gewicht des Laderaums bzw. des darin befindlichen Ladeguts erfasst werden kann.

Dabei sei erwähnt, dass hier allgemein angenommen wird, dass das Leergewicht des Transportfahrzeugs sowie relevanter Teile desselben, wie beispielsweise des Laderaums, bekannt ist, sodass hier und im Folgenden der Einfachheit halber von Erfassen des Gewichts des Laderaums bzw. Ladeguts die Rede ist, auch wenn die gemessene Gewichtskraft auch Teile des Transportfahrzeugs umfasst. Weist das Transportfahrzeug mehrere Laderäume auf, so können die Wiegevorrichtungen stets so angeordnet werden, dass das Gesamtgewicht jedes Laderaums inklusive Inhalt separat erfasst werden kann. Beispielsweise kann jeder Laderaum über eine oder mehrere Wägezellen bzw. Wiegestäbe an dem Fahrgestell des Transportfahrzeugs gelagert sein, wobei die Ausgangssignale der Gruppe von Wiegevorrichtungen, die einem bestimmten Laderaum zugeordnet sind, separat von den Ausgangssignalen der übrigen Wiegevorrichtungen verarbeitet werden.

Die Wiegevorrichtung kann dazu ausgebildet sein, die Messsignale über Kabel, beispielsweise über einen Bus, insbesondere einen CAN-Bus, und/oder kabellos, beispielsweise über ein Kommunikationsmodul, insbesondere ein Bluetooth- oder Wi-Fi-Sendermodul, auszugeben und zu übermitteln. Hierzu kann die Wiegevorrichtung die üblichen und an sich bekannten Elemente wie eine Kodierungseinrichtung, einen Transmitter oder dergleichen aufweisen.

Ferner weist der Futtermischwagen wenigstens eine inertiale Messeinheit zum Messen einer Beschleunigung und/oder Orientierung des Futtermischwagens, insbesondere des Laderaums, auf. Inertiale Messeinheiten (IMU - Inertial Measurement Unit) sind im Stand der Technik wohl bekannt, sodass aus Klarheitsgründen auf eine detaillierte Beschreibung verzichtet wird. Eine inertiale Messeinheit umfasst eine räumliche Kombination mehrerer inertialer Sensoren wie Beschleunigungssensoren und Drehratensensoren. Durch Vorsehen von bis zu 3 jeweils aufeinander orthogonal stehenden Beschleunigungssensoren (Translationssensoren) für die Erfassung der translatorischen Bewegung in X- bzw. Y- bzw. Z-Richtung und bis zu 3 orthogonal zueinander angebrachten Drehratensensoren (gyroskopischer Sensoren) für die Erfassung rotierender (kreisender) Bewegungen, beispielsweise um die Gierachse, die Längsachse des Fahrzeugs sowie dessen Querachse, können bis zu 6 mögliche kinematische Freiheitsgrade erfasst werden. Eine inertiale Messeinheit ist dazu ausgebildet, sowohl eine Beschleunigung als auch eine Orientierung bzw. Drehrate bezüglich wenigstens eines Freiheitsgrades zu messen. Insbesondere kann die inertiale Messeinheit dazu ausgebildet sein, die Beschleunigung und Orientierung bzw. Drehrate in allen 6 Freiheitsgraden zu messen. Während hier und im Folgenden stets vom Erfassen einer Orientierung die Rede ist, versteht sich von selbst, dass äquivalent auch eine Drehrate erfasst werden kann. Die zeitliche Änderung der Orientierung bezüglich einer Drehachse entspricht dabei der Drehrate um diese Drehachse. Zusätzlich oder alternativ zu den gyroskopischen Sensoren kann die inertiale Messeinheit auch Magnetfeldsensoren (Magnetometer) zum Erfassen der Orientierung umfassen.

Die inertiale Messeinheit kann insbesondere als kompaktes Bauteil ausgebildet sein, wobei die Translationssensoren, gyroskopischen Sensoren und/oder Magnetfeldsensoren zusammen mit einem Prozessor, beispielsweise einer CPU, in einem einzigen Chip integriert sind. Alternativ können die Translationssensoren und gyroskopischen Sensoren auf einer gedruckten Leiterplatte angeordnet sein, während die CPU und/oder die Magnetfeldsensoren separat angeordnet sind. Die inertiale Messeinheit kann dazu ausgebildet sein, Beschleunigung und/oder Orientierung mit einer Frequenz zu erfassen, die größer als oder gleich der Messfrequenz der Wiegevorrichtungen ist. Weitere spezielle Weiterbildungen der wenigstens einen inertialen Messeinheit werden weiter unten im Detail aufgeführt.

Das landwirtschaftliche Transportfahrzeug weist wenigstens eine inertiale Messeinheit auf, wobei die wenigstens eine inertiale Messeinheit im Bereich eines Schwerpunktes des Futtermischwagens, an einer oder mehreren Achsen und/oder an einer Anhängevorrichtung angeordnet ist. Insbesondere kann an jeder Radachse des Transportfahrzeugs eine separate inertiale Messeinheit angeordnet sein, um die Beschleunigungen sowie die Orientierung der entsprechenden Achse zu messen. Selbstverständlich können auf jeder Seite des Futtermischwagens jeweils separate inertiale Messeinheiten angeordnet sein, um die Beschleunigungen sowie die Orientierung der entsprechenden Seite der jeweiligen Achse bzw. Achsaufhängung zu messen. Die Wahl der Stellen, an denen separate inertiale Messeinheiten angeordnet werden, kann insbesondere den Auflage- bzw. Abstützpunkten des Fahrgestells folgen. Ist das Fahrgestell beispielsweise beidseitig an den Radachsen abgestützt, können die oben erwähnten separaten inertialen Messeinheiten auf jeder Seite des Futtermischwagens vorgesehen sein. Eine im Bereich des Schwerpunktes, insbesondere unterhalb des Schwerpunkts, also in etwa mittig zwischen den Fahrzeugseiten, angeordnete inertiale Messeinheit kann hingegen die Gesamtbeschleunigung des Futtermischwagens sowie dessen Orientierung erfassen. Eine an einer Anhängevorrichtung angeordnete inertiale Messeinheit ist besonders dazu geeignet, von einem Zugfahrzeug verursachte Schwingungen und Beschleunigungen zu erfassen. Ist nur eine inertiale Messeinheit vorgesehen, so kann diese vorteilhaft in der Nähe des Schwerpunktes, d.h. weniger als 50 cm entfernt, bevorzugt weniger als 20 cm entfernt von dem Schwerpunkt des Futtermischwagens angeordnet sein. Dabei kann die inertiale Messeinheit insbesondere unterhalb des Schwerpunktes angeordnet sein.

Die wenigstens eine inertiale Messeinheit kann dazu ausgebildet sein, die Messsignale über Kabel, beispielsweise über einen Bus, insbesondere einen CAN-Bus, und/oder kabellos, beispielsweise über ein Kommunikationsmodul, insbesondere ein Bluetooth- oder Wi-Fi-Sendermodul, auszugeben und zu übermitteln. Hierzu kann die inertiale Messeinheit die üblichen und an sich bekannten Elemente wie eine Kodierungseinrichtung, einen Transmitter, oder dergleichen aufweisen.

Die wenigstens eine inertiale Messeinheit kann derart angeordnet sein, dass sie bei Fahrt in einer horizontalen Ebene mittels eines Translationssensors die Beschleunigung in Richtung der Gewichtskraft misst. Bei Fahrt mit Neigung können die von der inertialen Messeinheit erfassten Orientierungswinkel in Kombination mit den gemessenen Beschleunigungen senkrecht zu der von dem Translationssensor gemessenen Beschleunigung verwendet werden, um die Beschleunigung in Richtung der Gewichtskraft zu bestimmen. Aus der vollständigen Erfassung aller 6 Freiheitsgrade lässt sich unabhängig von der Orientierung des Transportfahrzeugs und den auf das Transportfahrzeug wirkenden Kräften und Drehmomenten stets ein in Richtung der Gewichtskraft, d.h. der Erdbeschleunigung, wirkendes Störsignal bestimmen.

Die von der wenigstens einen inertialen Messeinheit gemessene Beschleunigung und/oder Orientierung kann somit verwendet werden, um den verfälschenden Einfluss der oben genannten Beschleunigungen, Schwingungen und Neigungen des Futtermischwagens auf das gemessene Gewicht zu kompensieren. Insbesondere besteht eine Korrelation zwischen Schwingungen bzw. Spitzen im Ausgangssignal der wenigstens einen Wiegevorrichtung und Schwingungen bzw. Spitzen in dem in Richtung der Gewichtskraft wirkenden Störsignal, das aus den Messsignalen der wenigstens einen inertialen Messeinheit bestimmt werden kann. Diese Korrelation kann verwendet werden, um Artefakte aufgrund der oben beschriebenen Beschleunigungen, Schwingungen und Neigungen des Futtermischwagens aus den von der wenigstens einen Wiegevorrichtung bestimmten Ausgangssignalen zu entfernen. Erfindungsgemäß erfolgt diese Kompensation bezüglich der gemessenen Beschleunigung und/oder Orientierung an dem Rohsignal der Wiegevorrichtung. Anders als eine Filterung oder Glättung der Ausgangssignale der wenigstens einen Wiegevorrichtung erfordert die Kompensation bezüglich der gemessenen Beschleunigung und/oder Orientierung nur einen geringen Zeitaufwand, insbesondere da die Korrelation je nach Anordnung der Wiegevorrichtungen bezüglich der inertialen Messeinheiten annähernd ohne Zeitverzögerung ist. Die von den Wiegevorrichtungen gemessenen Gewichtskräfte können somit annähernd instantan korrigiert, d.h. kompensiert werden. Dadurch können die zuvor erwähnten Zwangsstopps des Fahrzeugs vermieden werden.

Die Kompensation des oder der Rohsignale der wenigstens einen Wiegevorrichtung bezüglich der von der wenigstens einen inertialen Messeinheit gemessenen Beschleunigung und/oder Orientierung erfolgt erfindungsgemäß in einer Recheneinheit des Futtermischwagens, die insbesondere in der wenigstens einen inertialen Messeinheit integriert sein kann. Bei der Recheneinheit kann es sich um einen Prozessor, beispielsweise eine CPU oder eine GPU, oder einen digitalen Signalprozessor (DSP) handeln. Die Kompensation des oder der Rohsignale kann über Software und/oder Hardware erfolgen. Hierzu kann ein Field Programmable Gate Array (FPGA) oder eine anwendungsspezifische integrierte Schaltung (ASIC) vorgesehen sein.

Die Recheneinheit kann über kabellose Kommunikation und/oder Kabel mit den Wiegevorrichtungen und der wenigstens einen inertialen Messeinheit verbunden sein. Dabei sind unterschiedlichste Topologien denkbar. Beispielsweise können mehrere Wiegevorrichtungen Rohsignale an die Recheneinheit übertragen, die mit der von einer einzigen inertialen Messeinheit gemessenen Beschleunigung und/oder Orientierung kompensiert werden. Umgekehrt kann das Rohsignal einer spezifischen Wiegevorrichtung mit von mehreren inertialen Messeinheiten gemessenen Beschleunigungen und/oder Orientierungen kompensiert werden, wobei verschiedene Weiterverarbeitungen wie beispielsweise Mitteilungen zur Anwendung kommen können. In einem speziellen Fall kann jedem Rohsignal einer Wiegevorrichtung eine eigene inertiale Messeinheit zugeordnet sein, deren gemessene Beschleunigung und/oder Orientierung von der Recheneinheit zur Kompensation des Rohsignals verwendet wird. Es können auch mehrere Recheneinheiten vorgesehen sein, die jeweils mehrere Rohsignale verarbeiten. Des Weiteren ist eine in eine inertiale Messeinheit integrierte Recheneinheit denkbar, die mehrere Rohsignale verschiedener Wiegevorrichtungen mittels der von dieser inertialen Messeinheit gemessenen Beschleunigung und/oder Orientierung verarbeitet.

Die Recheneinheit ist somit erfindungsgemäß dazu ausgebildet, mehrere Rohsignale mehrerer Wiegevorrichtungen mit den Ausgangssignalen von einer oder mehreren inertialen Messeinheiten zu kombinieren, um verfälschende Einflüsse auf die gemessenen Gewichtssignale durch Beschleunigungen, Schwingungen und Neigungen des Transportfahrzeugs zu eliminieren bzw. zu kompensieren. Hierzu wendet die Recheneinheit Verarbeitungsmethoden der sogenannten Informationsfusion an, bei der Daten aus unterschiedlichen Sensoren mit dem Ziel verknüpft werden, präzisere Messergebnisse zu gewinnen. Details der speziellen Verknüpfung der Daten werden anhand eines Beispiels im Zusammenhang mit den Figuren genauer beschrieben. Die Recheneinheit kann zur Informationsfusion ein Speichermedium und/oder eine beschreibbare und insbesondere nicht flüchtige Speichereinheit zur Speicherung von Instruktionen als Software umfassen, die bestimmen, welche der Ausgangssignale der Wiegevorrichtungen und inertialen Messeinheiten von der Recheneinheit verarbeitet werden. Das Speichermedium kann insbesondere wiederbeschreibbar ausgebildet sein, beispielsweise in Form von Flash-Speichern, EEPROM, RAM oder dergleichen.

Wie erwähnt kann jeder Wiegevorrichtung eine separate inertiale Messeinheit zugeordnet sein, die dazu ausgebildet ist, das Rohsignal dieser Wiegevorrichtung zu kompensieren. In diesem Fall ist es besonders vorteilhaft, wenn die inertiale Messeinheit in unmittelbarer Nähe der entsprechenden Wiegevorrichtung, d.h. weniger als 50 cm entfernt, bevorzugt weniger als 20 cm entfernt angeordnet ist. Durch den direkten räumlichen Bezug zwischen der inertialen Messeinheit und der Wiegevorrichtung wird sichergestellt, dass die das Rohsignal der Wiegevorrichtung verfälschenden Schwingungen, Beschleunigungen und Neigungen lokal durch die inertiale Messeinheit erfasst werden.

Die Recheneinheit der inertialen Messeinheit kann des Weiteren konfigurierbar ausgebildet sein, um das Rohsignal der Wiegevorrichtung in Abhängigkeit von einer Position der Wiegevorrichtung am landwirtschaftlichen Transportfahrzeug zu kompensieren. Die Konfigurierbarkeit kann beispielsweise mittels des oben erwähnten Speichermediums bzw. der Speichereinheit realisiert werden. Abhängig von der Position der Wiegevorrichtung am Futtermischwagen werden wie oben erwähnt unterschiedliche Teile des Futtermischwagens beim Wiegevorgang miterfasst. Beispielsweise erfasst eine an der Achse eines einachsigen Futtermischwagens angeordnete Wiegevorrichtung das Gesamtgewicht des Futtermischwagens abzüglich des auf einer Anhängevorrichtung des Futtermischwagens lastenden Teilgewichts. Über die Konfigurierbarkeit der Recheneinheit können Anteile am Rohsignal, die auf das erfasste Leergewicht der jeweiligen Teile des Futtermischwagens zurückzuführen sind, vom Rohsignal bzw. vom kompensierten Rohsignal abgezogen werden.

Der Futtermischwagen kann weiterhin einen Wiegecomputer umfassen, der dazu ausgebildet ist, die kompensierten Rohsignale der wenigstens einen Wiegevorrichtung zu einem Gesamtgewicht des Ladeguts in dem Laderaum zu verarbeiten. Im einfachsten Fall kann der Wiegecomputer die kompensierten Rohsignale der Gruppe von Wiegevorrichtungen addieren, die einem bestimmten Laderaum zugeordnet sind. Des Weiteren kann die oben erwähnte Subtraktion des an sich bekannten Leergewichts des Laderaums bzw. weiterer Teile des Futtermischwagens von den einzelnen oder summierten kompensierten Rohsignalen durchgeführt werden, um das Gesamtgewicht des Ladeguts zu bestimmen. Der Wiegecomputer kann dazu ausgebildet sein, das Gesamtgewicht des Ladeguts in jedem Laderaum separat zu bestimmen. Zur Verarbeitung der kompensierten Rohsignale ist der Wiegecomputer mit der wenigstens einen Recheneinheit über Kabel und/oder kabellose Kommunikation verbunden. Hierzu weist der Wiegecomputer die bekannten Einrichtungen, wie wenigstens einen Bus, insbesondere einen CAN-Bus, ein Sendermodul, insbesondere für Bluetooth oder WiFi Kommunikation, oder dergleichen auf.

Des Weiteren kann der Wiegecomputer ein Display, insbesondere ein Touchscreen Display, aufweisen, auf dem unter anderem das bestimmte Gesamtgewicht des Ladeguts angezeigt werden kann. Über das Touchscreen Display und/oder eine andere Eingabeeinheit des Wiegecomputers kann der Benutzer Eingaben vornehmen, um beispielsweise eine Futtermischung oder ein Fütterprogramm auszuwählen. Der Wiegecomputer kann sich in einer Kabine eines selbst fahrenden Transportfahrzeugs befinden oder an geeigneter Stelle eines gezogenen Transportfahrzeugs angeordnet sein. Der Wiegecomputer wie auch die Wiegevorrichtungen und inertialen Messeinheiten können batteriegetrieben sein, wobei die Batterie kabellos aufladbar sein kann, oder mit einer Stromversorgung des Transportfahrzeugs verbunden sein kann. Der Wiegecomputer kann programmierbar sein und dazu eine Speichereinheit, beispielsweise einen Flash-Speicher aufweisen. Durch Programmierung des Wiegecomputers können vorprogrammierte Ladeprogramme und/oder Entladeprogramme des Laderaums gefahren werden, die beispielsweise auf eine spezifische Futterzusammensetzung bzw. eine spezifische Fütterung verschiedener Viehgruppen abgestimmt sind. Dabei können Anweisungen für den Betreiber des Transportfahrzeugs auf dem Display des Wiegecomputers angezeigt werden.

Der Wiegecomputer kann weiterhin dazu ausgebildet sein, einen Filter, insbesondere einen Glättungsfilter oder einen Tiefpassfilter, auf die kompensierten Rohsignale anzuwenden. Ein solcher Filter kann angewendet werden, um hochfrequente Schwingungssignale aus den kompensierten Rohsignalen zu entfernen. Da die Rohsignale jedoch bereits mittels der von der wenigstens einen inertialen Messeinheit gemessenen Beschleunigung und/oder Orientierung korrigiert wurden, weisen die Eingangssignale am Wiegecomputer erheblich geringere Schwankungen auf als die unkompensierten Rohsignale. Aus diesem Grund kann der Filter nicht nur präziser, sondern auch effizienter und schneller eingesetzt werden. Durch die Vorkompensation mittels der gemessenen Beschleunigungen und/oder Orientierungen lässt sich somit die übliche zeitliche Verzögerung bei der Ausgabe des bestimmten Gewichts des Ladeguts durch den Wiegecomputer vermeiden. Dadurch kann auch der gesamte Ladevorgang bzw. Entladevorgang beschleunigt werden.

Der Wiegecomputer kann weiterhin ein drahtloses Kommunikationsmodul, insbesondere ein Bluetooth-Modul oder ein WiFi-Modul, für eine drahtlose Kommunikation mit einem Software-asa-Service (SaaS) Anbieter und/oder einem mobilen Telekommunikationsendgerät, beispielsweise einem tragbaren Bediengerät mit Touchscreen Display, einem Laptop, Tablet oder Smartphone, aufweisen. Über drahtlose Kommunikation mit einem SaaS Anbieter kann der Wiegecomputer somit mit der Cloud verbunden werden, wodurch die in der Speichereinheit des Wiegecomputers gespeicherte Software aktualisiert werden kann. Auf diese Weise können automatisch neue Rezepturen für Futtermischungen und verbesserte Entladeprogramme aus der Cloud auf den Wiegecomputer heruntergeladen werden. Über die Datenanbindung des Wiegecomputers an die wenigstens eine Recheneinheit, insbesondere integriert in die wenigstens eine inertiale Messeinheit, kann auch die in den Speichereinheiten der wenigstens einen Recheneinheit gespeicherte Software aktualisiert werden, um eine verbesserte Verarbeitung der eingehenden Datensignale zu ermöglichen. Alternativ können die Recheneinheiten bzw. die inertialen Messeinheiten eigene drahtlose Kommunikationsmodule für eine drahtlose Kommunikation mit einem SaaS Anbieter aufweisen, über die die jeweilige Software aktualisiert werden kann. In diesem Fall kann die Software in Abhängigkeit von einer geänderten Position der inertialen Messeinheit bzw. der wenigstens einen Wiegevorrichtung angepasst werden.

Wie erwähnt kann die inertiale Messeinheit, insbesondere die integrierte Recheneinheit, eine beschreibbare, insbesondere nicht flüchtige, Speichereinheit zum Speichern von Software aufweisen. Die Speichereinheit kann beispielsweise einen Flash-Speicher umfassen.

Das landwirtschaftliche Transportfahrzeug ist ein Futtermischwagen, wobei wenigstens ein Mischbehälter als Laderaum für Futter als Ladegut vorgesehen ist. In dem Mischbehälter wird wie an sich bekannt die Futtermischung zusammengestellt, wobei ein entsprechendes Mischorgan, beispielsweise eine Mischschnecke, vorgesehen sein kann, um die von oben in den Mischbehälter eingefüllten Futterkomponenten miteinander zu vermischen. Eine Vielzahl alternativer Weiterbildungen, beispielsweise mit einem Paddelmischer, Ketten usw., sind im Stand der Technik bekannt und können auf die hier beschriebenen Transportfahrzeuge angewendet werden.

Wie oben beschrieben kann wenigstens eine Wiegevorrichtung im Bereich des Schwerpunktes des Futtermischwagens und/oder an einer Achse des Futtermischwagens und/oder an einer Anhängevorrichtung vorgesehen sein. Ebenso kann wenigstens eine inertiale Messeinheit im Bereich des Schwerpunktes des Futtermischwagens und/oder an einer Achse des Futtermischwagens und/oder an einer Anhängevorrichtung vorgesehen sein. Die Anordnung der Wiegevorrichtungen kann so gewählt werden, dass das Gesamtgewicht des wenigstens einen Laderaums zuverlässig erfasst werden kann. Beispielsweise ist es bei einem geführten Futtermischwagen wünschenswert, eine Wiegevorrichtung auch an der Anhängevorrichtung vorzusehen, um den dort lastenden Anteil der Gewichtskraft zu erfassen. Ansonsten gelten die oben beschriebenen Weiterbildungen für die Anordnung der Wiegevorrichtungen und inertialen Messeinheiten. Insbesondere kann die wenigstens eine inertiale Messeinheit derart angeordnet werden, dass Beschleunigungen und/oder Orientierungen, die sich auf die Signale der jeweiligen Wiegevorrichtung auswirken, optimal erfasst werden.

Gemäß einer Weiterbildung kann der Wiegecomputer ferner dazu ausgebildet sein, ein vorprogrammiertes oder automatisches Beladen des wenigstens einen Mischbehälters durch eine oder mehrere Ladeöffnungen und/oder ein vorprogrammiertes oder automatisches Entladen des wenigstens einen Mischbehälters durch eine oder mehrere Ausbringöffnungen, insbesondere in Abhängigkeit von einer Rezeptur für das Futter, zu steuern. Hierzu kann der Wiegecomputer insbesondere über ein drahtloses Kommunikationsmodul mit einer entsprechenden Steuereinheit des Transportfahrzeugs und/oder Zuführeinrichtungen für Futterkomponenten, beispielsweise Silos, kommunizieren. Das vorprogrammierte oder automatische Beladen bzw. vorprogrammierte oder automatische Entladen kann wie erwähnt anhand in einer Speichereinheit des Wiegecomputers gespeicherter und aktualisierter Programme ablaufen.

Außerhalb der Erfindung ist ferner ein Wiegesystem zur Verwendung in einem Futtermischwagen nach einer der oben beschriebenen Weiterbildungen beschrieben, mit wenigstens einer Wägezelle zum Erfassen eines Gewichts bzw. einer Gewichtskraft, wobei die Wägezelle eine integrierte inertiale Messeinheit mit einer Recheneinheit zum Erfassen einer Beschleunigung und/oder Orientierung der Wägezelle umfasst, und wobei die inertiale Messeinheit dazu ausgebildet ist, ein Rohsignal der Wägezelle bezüglich der gemessenen Beschleunigung und/oder Orientierung, insbesondere mittels Informationsfusion, zu kompensieren.

Hierbei können dieselben Variationen und Weiterbildungen, die oben im Zusammenhang mit dem erfindungsgemäßen Futtermischwagen beschrieben wurden, insbesondere die dort beschriebenen Weiterbildungen der Wiegevorrichtungen, der inertialen Messeinheit sowie der Recheneinheit auf das Wiegesystem angewandt werden. Insbesondere kann die Wägezelle als Wiegestab ausgebildet sein.

Jede Wägezelle des Wiegesystems besitzt somit eine eigene integrierte inertiale Messeinheit mit zugehöriger Recheneinheit, wobei die inertiale Messeinheit eine Beschleunigung und/oder Orientierung bzw. Drehrate bezüglich bis zu 6 Freiheitsgraden misst. Das von der Wägezelle ausgegebene Rohsignal wird, mittels der Recheneinheit, bezüglich der gemessenen Beschleunigung und/oder Orientierung verarbeitet, sodass verfälschende Einflüsse der zuvor erwähnten Schwingungen, Beschleunigungen und Neigungen der Wägezelle aus dem Rohsignal entfernt werden können, d.h. das Rohsignal kompensiert werden kann. Vorteilhaft sind die Wägezelle und die integrierte inertiale Messeinheit über entsprechende elektrische Verbindungen mit Signaleingängen der Recheneinheit verbunden, an die die Messwerte der Wägezelle und der integrierten inertialen Messeinheit eingegeben werden.

Die inertiale Messeinheit kann in die Wägezelle integriert sein, indem die Wägezelle mit der inertialen Messeinheit als kompaktes Bauteil ausgebildet ist, an dem die inertiale Messeinheit an geeigneter Stelle angeordnet ist. Beispielsweise kann die inertiale Messeinheit zusammen mit weiterer Elektronik der Wägezelle auf einer gemeinsamen Leiterplatte angeordnet sein. In jedem Fall ist gemäß dieser Weiterbildung die inertiale Messeinheit in die Wägezelle integriert, indem baulich feste elektrische Verbindungen zwischen der Wägezelle und der inertialen Messeinheit vorgesehen sind. Des Weiteren kann die inertiale Messeinheit mechanisch fest mit der Wägezelle verbunden sein. Eine Wägezelle mit integrierter inertialer Messeinheit kann als kompaktes Bauteil auf einfache Weise in Wiegesystemen und landwirtschaftlichen Transportfahrzeugen eingebaut und eingesetzt werden.

Die inertiale Messeinheit, genauer deren Recheneinheit, kann dazu ausgebildet sein, das Rohsignal der Wägezelle zusammen mit den Ausgangssignalen der inertialen Messeinheit mittels Informationsfusion wie oben beschrieben zu verarbeiten. Insbesondere kann die inertiale Messeinheit bzw. deren Recheneinheit dazu ausgebildet sein, das Rohsignal auf der Grundlage einer Korrelation zwischen Rohsignal und gemessener Beschleunigung und/oder Orientierung zu kompensieren. Hierzu kann die Recheneinheit zunächst eine Beschleunigungskomponente in Richtung der Schwerkraft aus den bis zu 3 gemessenen Beschleunigungen und optional bis zu 3 gemessenen Orientierungen der inertialen Messeinheit bestimmen. Alternativ oder ergänzend kann die Recheneinheit eine Beschleunigungskomponente bestimmen, die einen maximalen Einfluss auf das Messergebnis der Wägezelle hat, beispielsweise indem diese Komponente senkrecht auf einer Messfläche, zum Beispiel einem Dehnungsmessstreifen, der Wägezelle steht. Die Recheneinheit kann die bis zu 6 gemessenen Signale der inertialen Messeinheit derart verarbeiten, dass möglichst alle Störsignale in der gemessenen Gewichtskraft der Wägezelle, die durch die oben genannten Schwingungen, Drehmomente, Beschleunigungen, Neigungen und dergleichen der Wägezelle bzw. des Wiegesystems entstehen, erfasst werden.

Die inertiale Messeinheit kann die Beschleunigung und/oder Orientierung insbesondere bezüglich optimaler Referenzwerte messen, da die Erdbeschleunigung bekannt und stets senkrecht zu der horizontalen Ebene ausgerichtet ist. Daher eignen sich die Ausgangssignale der inertialen Messeinheit besonders gut zur Kompensation der Einflüsse weiterer störender Kräfte, beispielsweise durch Seitenwind, durch Anfahren bzw. Abbremsen des Transportfahrzeugs, Zugkräfte eines Schleppers, Bremskräfte von Radachsen, Verwindungen von Boden und Rahmen, Schiebekräfte von Gelenkwellen, durch die Ladegutverteilung im Laderaum, sowie durch Änderung der Fahrtrichtung und Geschwindigkeit des Fahrzeugs. Schließlich kann das Wiegesystem, insbesondere die inertiale Messeinheit einen Temperatursensor aufweisen, der eine Umgebungstemperatur bestimmt. Die gemessene Umgebungstemperatur kann von der Recheneinheit verwendet werden, um die Genauigkeit des Rohsignals der Wägezelle durch Korrektur anhand der gemessenen Temperatur zu verbessern.

Wie erwähnt kann die inertiale Messeinheit dazu ausgebildet sein, das Rohsignal auf der Grundlage einer Korrelation zwischen Rohsignal und gemessener Beschleunigung und/oder Orientierung zu kompensieren. Insbesondere kann die Recheneinheit der inertialen Messeinheit eine Korrelation zwischen dem Rohsignal und jedem Ausgangssignal, d.h. von bis zu 6 Freiheitsgraden, der inertialen Messeinheit berechnen, um ein in dem Rohsignal enthaltenes Störsignal zu isolieren. Das Rohsignal kann dann durch Subtraktion des isolierten Störsignals kompensiert werden. Alternativ können die gemessene Beschleunigung und/oder Orientierung, d.h. die Ausgangssignale der inertialen Messeinheit, in Bezug auf das Rohsignal verschoben und skaliert werden, wobei die oben beschriebenen Verarbeitungen der Ausgangssignale zur Bestimmung einer Beschleunigungskomponente zuerst durchgeführt werden können.

Wie erwähnt kann die inertiale Messeinheit dazu ausgebildet sein, Bewegungen in allen 6 Freiheitsgraden zu messen. Bei geeigneter Ausrichtung kann es jedoch ausreichend sein, die Beschleunigung senkrecht zur Fahrebene sowie zumindest die Orientierungswinkel um die Längsachse und Querachse des Transportfahrzeugs zu messen.

Die inertiale Messeinheit kann insbesondere dazu ausgebildet sein das kompensierte Rohsignal als CAN-Datensignal auszugeben. Hierzu kann die inertiale Messeinheit einen oder mehrere CAN-Busse besitzen, über die entsprechend codierte Daten ausgegeben werden können.

Gemäß einer Weiterbildung kann das Wiegesystem, insbesondere die inertiale Messeinheit einer oder aller Wägezellen jeweils eine beschreibbare Speichereinheit zum Speichern von Software für die Informationsfusion aufweisen. Wie oben beschrieben kann diese Software spezifisch in Abhängigkeit von einer Position der eingesetzten Wägezelle an dem landwirtschaftlichen Transportfahrzeug gestaltet werden. Das Wiegesystem und insbesondere die Wägezelle mit integrierter inertialer Messeinheit kann zudem wie oben beschrieben ein drahtloses Kommunikationsmodul, beispielsweise via Bluetooth oder WiFi, zur Kommunikation mit einem SaaS Anbieter in der Cloud aufweisen, über das die in der Speichereinheit gespeicherte Software aktualisiert und an die jeweiligen Anforderungen angepasst werden kann. Die Speichereinheit kann wiederbeschreibbar und insbesondere nicht flüchtig ausgebildet sein, beispielsweise in Form eines Flash-Speichers.

Die von den Wägezellen mit integrierten inertialen Messeinheiten ausgegebenen kompensierten Rohsignale können von weiteren Einheiten des Wegesystems, beispielsweise einem Wiegecomputer, weiterverarbeitet werden, beispielsweise wie oben beschrieben durch Anwendung eines Filters und Addition zum Bestimmen des Gesamtgewichts. Dabei ist aufgrund der Integration der inertialen Messeinheiten in die jeweiligen Wägezellen sichergestellt, dass die Störeinflüsse durch Beschleunigungen, Schwingungen und Neigungen stets lokal an der relevanten Stelle gemessen werden. Die Rohsignale der Wägezellen können somit individuell und optimal kompensiert werden, sodass ein Gesamtergebnis mit hoher Präzision und ohne wesentlichen Zeitverlust zur Verfügung gestellt werden kann.

Die oben genannten Aufgaben werden auch gelöst durch die Verwendung eines der oben beschriebenen Wiegesysteme in einem landwirtschaftlichen Transportfahrzeug nach einer der oben beschriebenen Weiterbildungen. Ebenso werden die oben genannten Aufgaben durch ein Verfahren zum Erfassen des Gewichts von Ladegut in wenigstens einem Laderaum eines der oben beschriebenen landwirtschaftlichen Transportfahrzeuge gelöst, bei dem zunächst mittels wenigstens einer Wiegevorrichtung gemäß der oben beschriebenen Weiterbildungen ein Rohsignal auf der Grundlage der gemessenen Gewichtskraft ausgegeben wird. Ein oder mehrere Rohsignale werden dann wie oben im Detail beschrieben, insbesondere mittels Informationsfusion, mit den Ausgangssignalen einer oder mehrerer inertialen Messeinheiten weiterverarbeitet, um störende Einflüsse von Beschleunigungen, Schwingungen und Neigungen des Transportfahrzeugs zu kompensieren. Die inertialen Messeinheiten erfassen hierzu die Beschleunigung und/oder Orientierung der jeweiligen Messeinheit mit bis zu 6 Freiheitsgraden und geben die gemessenen Signale als Ausgangssignale an eine oder mehrere Recheneinheiten, insbesondere integriert in die jeweiligen inertialen Messeinheiten, weiter.

Hierbei können dieselben Variationen und Weiterbildungen, die oben im Zusammenhang mit dem erfindungsgemäßen landwirtschaftlichen Transportfahrzeug sowie dem erfindungsgemäßen Wiegesystem beschrieben wurden, auch auf das Verfahren zum Erfassen des Gewichts von Ladegut in einem Laderaum angewendet werden. Insbesondere können kompensierte Rohsignale von mehreren Recheneinheiten, insbesondere mehreren inertialen Messeinheiten mit integrierter Recheneinheit, in einem Wiegecomputer durch Anwendung eines Filters, insbesondere eines Glättungsfilters oder eines Tiefpassfilters, weiterverarbeitet werden. Die gefilterten Signale können anschließend kombiniert, insbesondere addiert werden, um das Gesamtgewicht von Ladegut in jedem Laderaum zu bestimmen. Es versteht sich, dass wie oben beschrieben ein miterfasstes Gewicht von Teilen des Transportfahrzeugs, beispielsweise das Leergewicht des Laderaums bzw. Mischbehälters, von dem kombinierten Signal abgezogen werden kann, um ausschließlich das Gewicht des Ladeguts zu bestimmen.

Die beschriebenen Transportfahrzeuge, Wiegesysteme und Wiegeverfahren gestatten ein schnelles und präzises Bestimmen des Gewichts von in einem Laderaum befindlichem Ladegut. Insbesondere können Verzögerungen aufgrund langwieriger Filterprozesse durch die Vorkompensation der Rohsignale vermieden werden. Dies beschleunigt auch den Ablauf von Lade- und Entladeprozessen im landwirtschaftlichen Betrieb und erleichtert die Arbeit des Landwirts.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
- Figur 1: zeigt ein landwirtschaftliches Transportfahrzeug gemäß einer ersten Weiterbildung der vorliegenden Erfindung.
- Figur 2: zeigt ein landwirtschaftliches Transportfahrzeug gemäß einer zweiten Weiterbildung der vorliegenden Erfindung.
- Figur 3: zeigt ein landwirtschaftliches Transportfahrzeug gemäß einer dritten Weiterbildung der vorliegenden Erfindung.
- Figur 4: zeigt ein erfindungsgemäßes Wiegesystem gemäß einer ersten Weiterbildung.
- Figur 5: zeigt ein erfindungsgemäßes Wiegesystem gemäß einer zweiten Weiterbildung.
- Figuren 6a-d: zeigen verschiedene Topologien erfindungsgemäßer Wiegesysteme.
- Figur 7: zeigt exemplarische Messkurven des Gewichts und der vertikalen Beschleunigung.
- Figur 8: zeigt die Messkurven der Figur 7 nach Verschieben des gemessenen Gewichts.
- Figur 9: zeigt einen zeitlichen Ausschnitt der Messkurven der Figur 8.
- Figur 10: zeigt ein Verfahren zum Erfassen eines Gewichts von Ladegut gemäß der vorliegenden Erfindung.

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

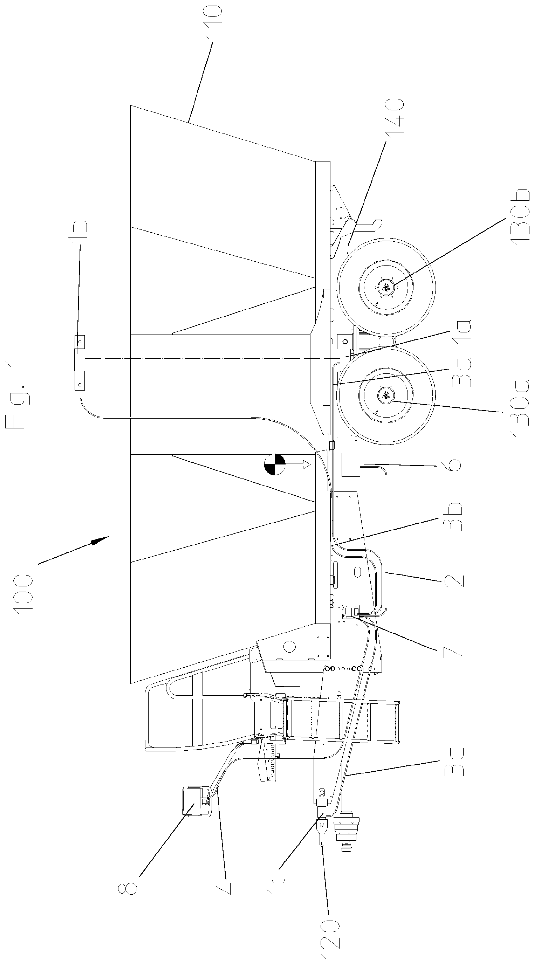

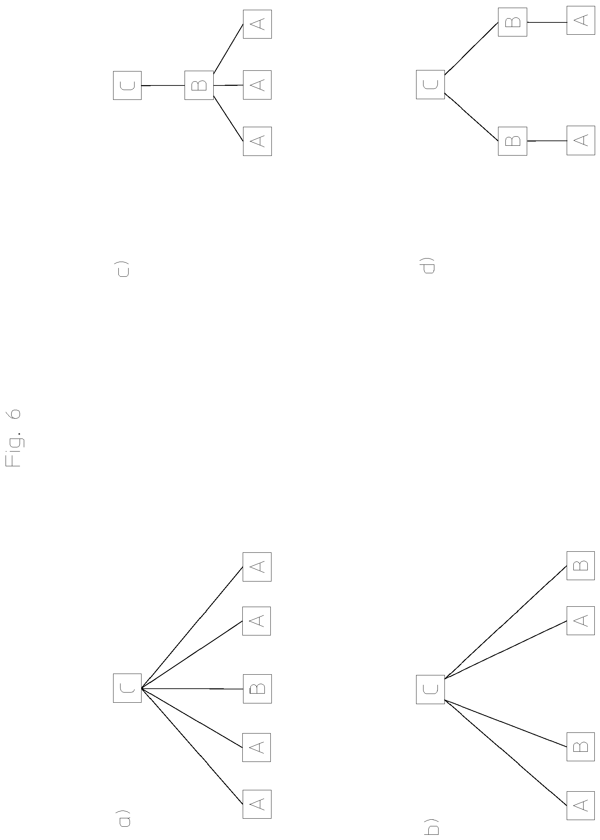

Die Figur 1 zeigt ein landwirtschaftliches Transportfahrzeug gemäß einer ersten Weiterbildung der vorliegenden Erfindung. Die Topologie des für dieses landwirtschaftliche Transportfahrzeug verwendeten Wiegesystems entspricht der abstrakten Topologie der Figur 6a.

In der Figur 1 ist exemplarisch ein über eine Deichsel als Anhängevorrichtung 120 gezogene Futtermischwagen 100 als Beispiel für ein landwirtschaftliches Transportfahrzeug dargestellt. Es versteht sich jedoch, dass die vorliegende Erfindung nicht auf die dargestellte spezifische Weiterbildung des landwirtschaftlichen Transportfahrzeugs beschränkt ist, sondern durch den Fachmann in Abwandlung auf weitere landschaftliche Transportfahrzeuge bekannter Art angewendet werden kann.

Der Futtermischwagen 100 weist neben den sonst üblichen Elementen in der dargestellten Weiterbildung einen einzigen Laderaum 110 auf, der über ein Fahrgestell 140 an einer Tandemachse gelagert ist. Es versteht sich, dass der Laderaum 110 einen oder mehrere Mischbehälter für das Viehfutter aufweisen kann. Die Tandemachse umfasst die beiden Radachsen 130a und 130b, mit denen das Fahrgestell 140 über Räder zum Boden hin gestützt ist. Das in dem Laderaum 110 befindliche Viehfutter ist somit zusammen mit den weiteren Komponenten des Transportfahrzeugs 100 über die rechte und linke Seite der Tandemachse und die Anhängevorrichtung 120 gestützt. In vorteilhafter Weise ist daher in der Weiterbildung der Figur 1 an jedem dieser Auflagepunkte eine Wägezelle 1a-c vorgesehen, mittels derer der jeweilige Anteil der Gewichtskraft am Gesamtgewicht des Transportfahrzeugs inklusive Beladung gemessen wird. Die Wägezelle 1b, die in Fahrtrichtung gesehen auf der rechten Seite des Transportfahrzeugs entsprechend der Anordnung der Wägezelle 1a zwischen der Tandemachse und dem Fahrgestell angeordnet ist, ist in den Figuren 1 bis 3 aus darstellerischen Gründen oberhalb des Laderaums 110 gezeigt.

Über elektrische Leitungen 3a-c werden die gemessenen Gewichtskräfte in Form von Rohsignalen an eine Recheneinheit 7 weitergeleitet, wo sie zusammen mit den von der inertialen Messeinheit 6 ausgegebenen und über die elektrische Leitung 2 übertragenen Messsignalen für gemessene Beschleunigungen und/oder Orientierungen wie oben beschrieben verarbeitet werden. In der hier dargestellten Weiterbildung ist lediglich eine einzige inertiale Messeinheit 6 vorgesehen, die unterhalb des in den Figuren 1 bis 3 durch einen Viertelkreis angedeuteten Schwerpunktes des Transportfahrzeugs 100 angeordnet ist. Dabei kann die Anordnung der inertialen Messeinheit 6 bezüglich des Schwerpunktes des leeren Transportfahrzeugs oder bezüglich des Schwerpunktes des maximal beladenen Transportfahrzeugs gewählt werden.

Mittels der Recheneinheit 7 werden die Rohsignale der Wägezellen 1a-c bezüglich der gemessenen Beschleunigung und/oder Orientierung kompensiert und anschließend über eine elektrische Leitung 4 an den Wiegecomputer 8 weitergegeben. Dabei kann die Recheneinheit 7 bereits weitere Verarbeitungsschritte an den kompensierten Rohsignalen vornehmen, beispielsweise durch Filterung, insbesondere Glättung, der kompensierten Rohsignale. Des Weiteren kann die Recheneinheit ein Gesamtgewicht durch Addition der gefilterten Signale bestimmen. Von dem bestimmten Gesamtgewicht des Transportfahrzeugs 100 inklusive Beladung kann das bekannte Leergewicht des Transportfahrzeugs mittels der Recheneinheit 7 abgezogen werden, sodass das bereits korrigierte Gewicht des Viehfutters an den Wiegecomputer 8 weitergegeben wird, wo es auf einem Display für den Bediener dargestellt werden kann. Alternativ kann die Weiterverarbeitung der kompensierten Rohsignale durch eine Recheneinheit des Wiegecomputers selbst erfolgen.

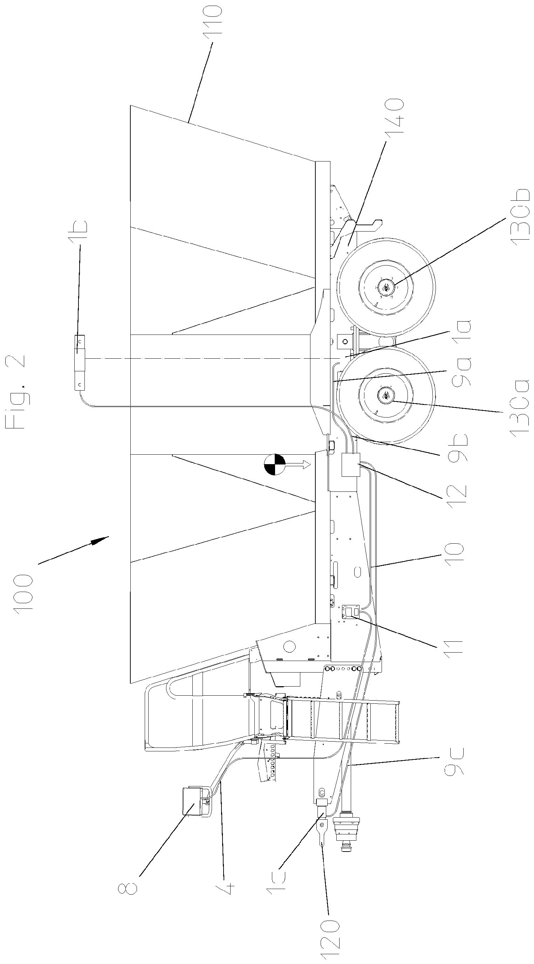

Die Figur 2 zeigt eine Variation des landwirtschaftlichen Transportfahrzeugs gemäß einer zweiten Weiterbildung der vorliegenden Erfindung. Die Topologie des Wiegesystems dieser Weiterbildung entspricht der abstrakten Topologie in Figur 6c.

Anders als bei der Weiterbildung der Figur 1 ist bei der Weiterbildung der Figur 2 die Vielzahl der Wägezellen 1a-c direkt über elektrische Leitungen 9a-c mit der inertialen Messeinheit 12 verbunden. Die oben erwähnte Kompensation der Rohsignale erfolgt somit durch eine Recheneinheit der inertialen Messeinheit 12. Da auch hier nur eine einzige inertiale Messeinheit 12 vorgesehen ist, ist diese vorteilhaft in der Nähe, insbesondere unterhalb, des Schwerpunktes angeordnet. Entsprechend der oben beschriebenen Weiterbildung kann nun die Recheneinheit der inertialen Messeinheit 12 die kompensierten Rohsignale weiterverarbeiten, um ein Gesamtgewicht des Transportfahrzeugs bzw. das Gewicht des Ladeguts zu berechnen. Alternativ können die kompensierten Rohsignale über die elektrische Leitung 10 an eine Recheneinheit 11 weitergegeben werden, die die beschriebenen Schritte zum Berechnen des Gesamtgewichts bzw. des Gewichts des Ladeguts durchführt. Das Ergebnis wird von der Recheneinheit 11 über die elektrische Leitung 4 an den Wiegecomputer 8 weitergegeben, der es auf einem Display darstellt. Der hier dargestellte Wiegecomputer 8 kann somit im Wesentlichen auf ein Display mit Eingabefunktion reduziert werden.

Es versteht sich, dass bei allen hier beschriebenen Weiterbildungen auch drahtlose Datenübertragung durch entsprechende Kommunikationsmodule der verwendeten Einheiten möglich ist. Zudem können die inertialen Messeinheiten, Recheneinheiten sowie der Wiegecomputer jeweils über Speichereinheiten und optional Kommunikationsmodule zur Anbindung an die Cloud verfügen, um speziell an die jeweilige Position und Funktion der jeweiligen Einheit angepasste Software in den Speichereinheiten zu speichern.

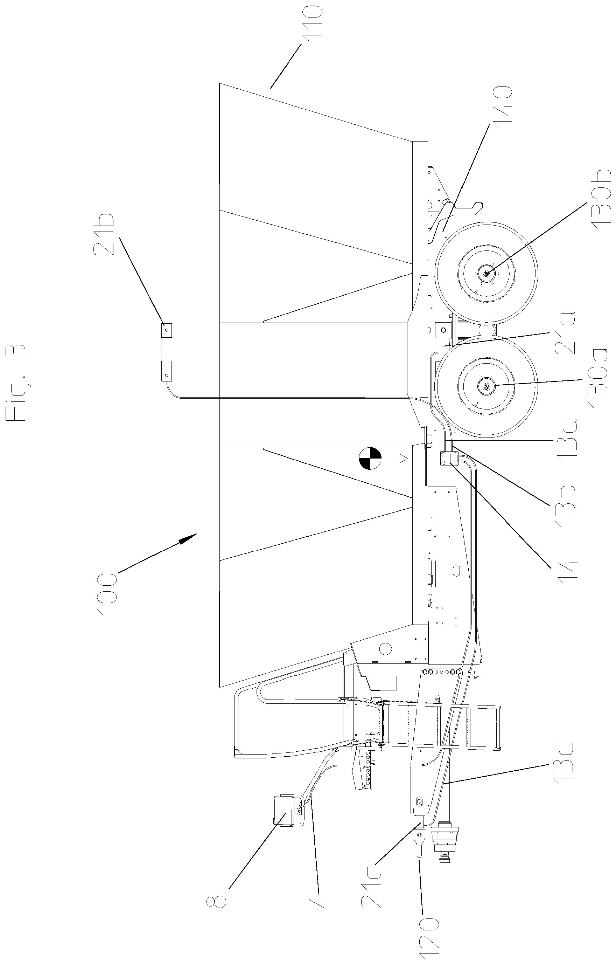

In Figur 3 ist ein landwirtschaftliches Transportfahrzeug gemäß einer dritten Weiterbildung der vorliegenden Erfindung dargestellt. Die hier eingesetzte Topologie des Wiegesystems entspricht der Topologie der Figur 6d mit in die Wägezellen integrierten inertialen Messeinheiten.

Dabei sind in der Weiterbildung der Figur 3 Wiegestäbe 21a-c an den Tandemachsen auf der rechten und linken Fahrzeugseite sowie der Anhängevorrichtung 120 vorgesehen, in die jeweils eine eigene inertiale Messeinheit inklusive Recheneinheit integriert ist. Die jeweilige Recheneinheit kompensiert dabei die von dem jeweiligen Wiegestab gemessene Gewichtskraft direkt mit den von der zugehörigen inertialen Messeinheit erfassten Werten der Beschleunigung und/oder Orientierung des Wiegestabs. Aufgrund des engen räumlichen Bezugs zwischen Wiegestab und zugehöriger inertialer Messeinheit können bei dieser Weiterbildung mögliche Fehler, die durch Abweichen des Schwerpunkts des beladenen Transportfahrzeugs von der Anordnung der inertialen Messeinheit sowie durch unterschiedliche Beschleunigungen an den jeweiligen Wägezellen entstehen können, vermieden werden.

Die bereits kompensierten Rohsignale werden von den Wägezellen mit integrierten inertialen Messeinheiten über elektrische Leitungen 13a-c an die Recheneinheit 14 übertragen, die die oben beschriebenen weiteren Verarbeitungsschritte zur Bestimmung des Gesamtgewichts bzw. des Gewichts des Ladeguts durchführt. Das Ergebnis wird erneut über die elektrische Leitung 4 an den Wiegecomputer 8 übertragen, wo es auf einem Display dargestellt wird.

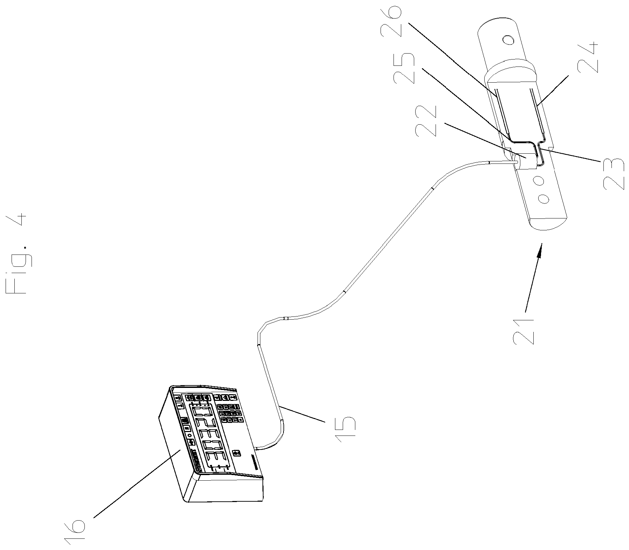

Die Figur 4 zeigt ein Wiegesystem gemäß einer ersten Weiterbildung mit einem Wiegestab mit integrierter inertialer Messeinheit. Von dem hier schematisch dargestellten Wiegesystem ist lediglich der Wiegecomputer 16 mit Bedieneinheit und Display und ein einziger Wiegestab 21 mit integrierter inertialer Messeinheit 22 dargestellt. Dabei ist in die inertiale Messeinheit 22 eine Recheneinheit zur Kompensation der Rohsignale des Wiegestabs integriert.

Der hier exemplarisch dargestellte Wiegestab 21 weist einen oberen Dehnungsmessstreifen 26 und einen unteren Dehnungsmessstreifen 24 auf, die über elektrische Leitungen 25 bzw. 23 mit der inertialen Messeinheit 22, genauer der Recheneinheit, verbunden sind. Somit gibt der als kompakte Baueinheit ausgebildete Wiegestab 21 bereits das mittels von der inertialen Messeinheit 22 gemessenen Beschleunigung und/oder Orientierung des Wiegestabs kompensierte Gewicht über die elektrische Leitung 15 an den Wiegecomputer 16 aus.

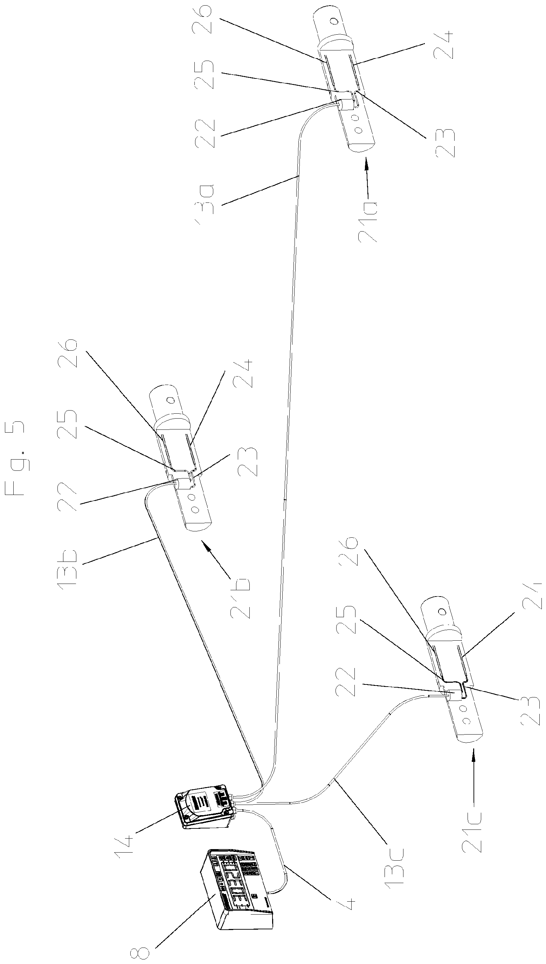

Eine Abwandlung des in Figur 4 gezeigten Wiegesystems gemäß einer zweiten Weiterbildung ist in Figur 5 gezeigt. Hier sind exemplarisch 3 Wiegestäbe 21a-c mit jeweils integrierten inertialen Messeinheiten 22 über elektrische Leitungen 13a-c mit einer Verbindungseinheit 14 verbunden, die die kompensierten Rohsignale der einzelnen Wiegestäbe sammelt, entsprechend codiert und über die Leitung 4 an den Wiegecomputer 8 weiterleitet. Dieser kann dann die oben beschriebenen weiteren Verarbeitungsschritte zur Bestimmung des Gesamtgewichts bzw. des Gewichts des Ladeguts durchführen. Alternativ kann die Verbindungseinheit 14 eine Recheneinheit aufweisen, die die Verarbeitungsschritte durchführt und das Endergebnis über die elektrische Leitung 4 an den Wiegecomputer 8 überträgt.

Da jeder Wiegestab 21a-c seine eigene inertiale Messeinheit 22 aufweist, können die Rohsignale der Dehnungsmessstreifen 24 und 26 mit den lokal gemessenen Beschleunigungen und/oder Orientierungen optimal kompensiert werden. Auf diese Weise kann das Gewicht des Ladeguts mit hoher Präzision bestimmt werden.

Die Figuren 6a-d zeigen verschiedene Topologien erfindungsgemäßer Wiegesysteme. Es versteht sich, dass auch Kombinationen der gezeigten Topologien denkbar sind. Zudem können landwirtschaftliche Transportfahrzeuge mehrere Wiegesysteme, beispielsweise separate Wiegesysteme für jeden Mischbehälter, einsetzen.

In den dargestellten Topologien bezeichnet A eine Wägezelle bzw. einen Wiegestab, während B eine inertiale Messeinheit bezeichnet. C kann eine Recheneinheit oder einen Wiegecomputer darstellen.

In der Topologie der Figur 6a sind eine Vielzahl von Wägezellen und wenigstens eine inertiale Messeinheit mit einer Recheneinheit verbunden, die die Rohsignale der Wägezellen zusammen mit den Ausgangssignalen der wenigstens einen inertialen Messeinheit verarbeitet, um kompensierte Rohsignale zu bestimmen.

In der Topologie der Figur 6b ist für jede Wägezelle eine separate inertiale Messeinheit vorgesehen, die vorteilhaft in unmittelbarer Nähe der jeweiligen Wägezelle angeordnet sein kann. Dabei werden von der Recheneinheit C die Rohsignale der Wägezellen und die Ausgangssignale der inertialen Messeinheiten jeweils paarweise entsprechend der jeweiligen Paarung verarbeitet, um eine Vielzahl kompensierter Rohsignale zu berechnen.

In der Topologie der Figur 6c werden die Rohsignale einer Vielzahl von Wägezellen bereits in der Recheneinheit der inertialen Messeinheit kompensiert, die die kompensierten Rohsignale oder weiterverarbeitete Signale an einen Wiegecomputer C weitergibt.

In der Topologie der Figur 6d schließlich ist jeder Wägezelle A eine eigene inertiale Messeinheit B mit integrierter Recheneinheit zugeordnet, die die Rohsignale der jeweiligen Wägezelle kompensiert und die kompensierten Rohsignale an den Wiegecomputer C weiterleitet. Eine besonders kompakte Bauform dieser Topologie ergibt sich durch die oben beschriebene Integration der inertialen Messeinheiten B in die jeweilige Wägezelle A.

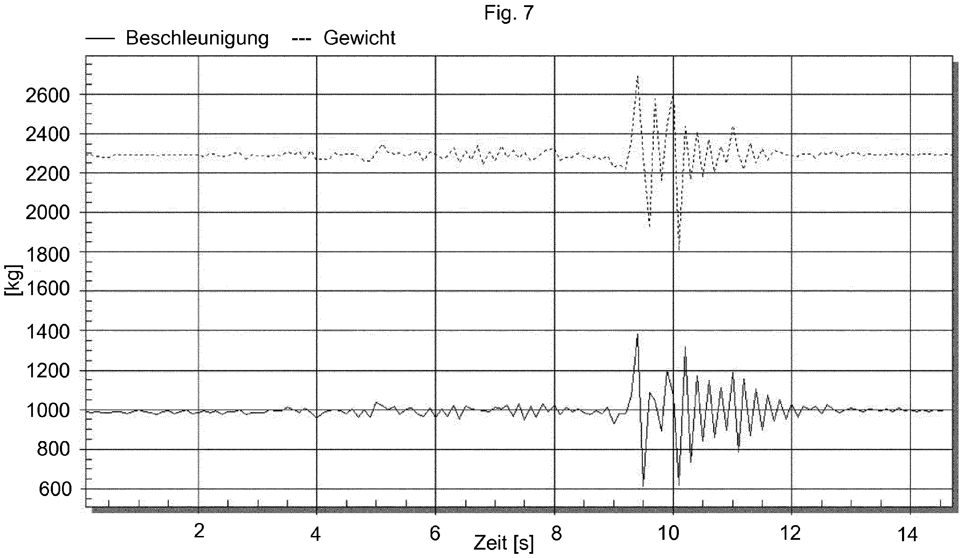

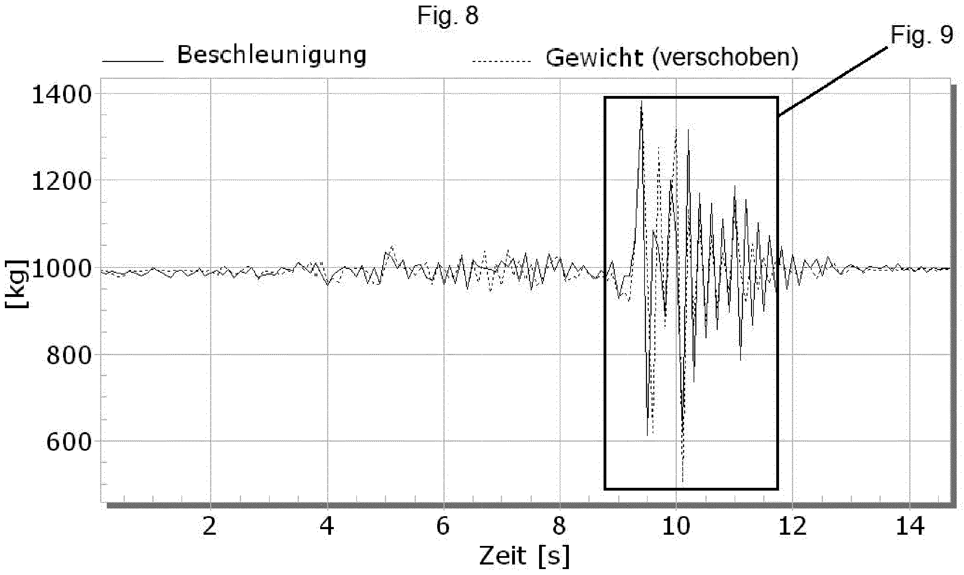

In den Figuren 7 bis 9 sind exemplarische Messkurven für eine mittels einer inertialen Messeinheit gemessene vertikale Beschleunigung und ein mittels eines Wiegestabs gemessenes Gewicht dargestellt. Die Auftragung der Messkurven gegen die Zeit zeigt bereits in den Rohdaten der Figur 7 eine starke Korrelation zwischen den Oszillationen der einzelnen Messkurven. Diese wird umso deutlicher, wenn das Gewicht wie in Figur 8 gezeigt auf die Grundlinie der Messkurve der Beschleunigung verschoben wird. Eine entsprechende Verschiebung, z.B. der gemessenen Beschleunigung, plus mögliche Skalierung der Schwankungen kann beispielsweise von der Recheneinheit der inertialen Messeinheit vorgenommen werden.

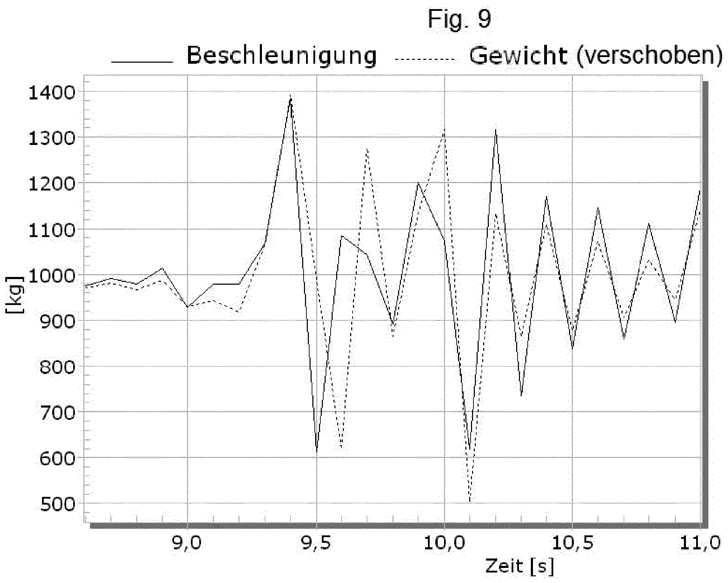

In Figur 9 ist ein zeitlicher Ausschnitt der Messkurven von Figur 8 nach Verschieben der Messkurve des Gewichts dargestellt, der die annähernd exakte Korrelation der Schwankungen verdeutlicht. Verschiebt man das Gewicht bzw. die Beschleunigung nach Skalierung zurück und zieht die skalierte Beschleunigung von dem Gewicht ab, so lässt sich auf einfache Weise ein kompensiertes Gewichtssignal erzeugen, bei dem die verfälschenden Einflüsse der Beschleunigung eliminiert wurden. Auf diese Weise kann auch ohne aufwändigen Filterprozess ein hochpräzises Messsignal gewonnen werden.

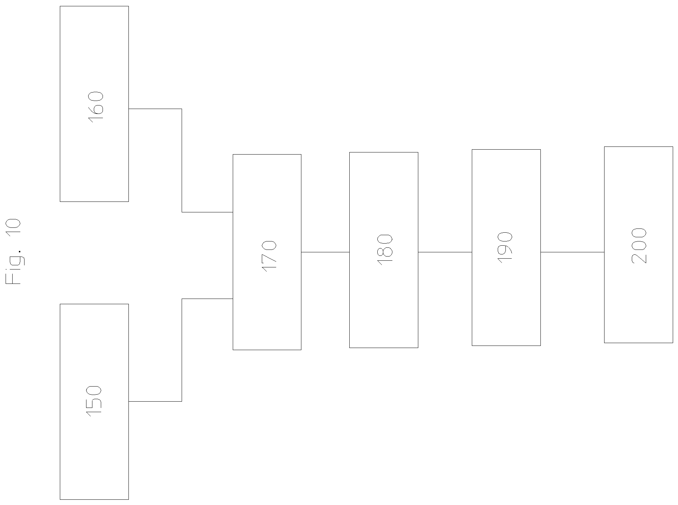

Die Figur 10 schließlich zeigt ein Verfahren zum Erfassen eines Gewichts von Ladegut gemäß der vorliegenden Erfindung. Parallel zueinander werden in Schritt 150 eine Gewichtskraft mittels einer Wägezelle bzw. eines Wiegestabs gemessen und als Rohsignal ausgegeben sowie in Schritt 160 eine Beschleunigung und/oder Orientierung mittels einer inertialen Messeinheit gemessen und als Ausgangssignale ausgegeben. Dabei können bis zu 6 Freiheitsgrade gemessen werden und entsprechend 6 Ausgangssignale ausgegeben werden. Die Messungen der Schritte 150 und 160 erfolgen wiederholt mit entsprechenden Messfrequenzen, wobei vorteilhaft die Messfrequenz der inertialen Messeinheit größer oder gleich der Messfrequenz der Wägezelle gewählt wird.

In Schritt 170 werden die Rohsignale der Wägezellen anhand der gemessenen Beschleunigungen und/oder Orientierungen kompensiert und als kompensierte Rohsignale ausgegeben. Die kompensierten Rohsignale werden in Schritt 180 zusätzlich gefiltert, insbesondere geglättet. Schließlich werden die gefilterten Signale in Schritt 190 addiert, wobei ein bekanntes Leergewicht des Transportfahrzeugs bzw. des Laderaums abgezogen werden kann. Das berechnete Gewicht des Ladeguts wird schließlich als Ergebnis in Schritt 200 auf einem Display eines Wiegecomputers dargestellt.

Anhand des dargestellten, mit hoher Präzision bestimmten Gewichts des Ladeguts kann ein Landwirt präzise erkennen, wieviel Futter in einem Laderaum verbleibt bzw. wieviel eine Futtermischung nach Zuladung einer bestimmten Futterkomponente wiegt. Auf diese Weise kann ein Beladungsvorgang eines Mischbehälters präzise und vorprogrammiert oder automatisch durchgeführt werden. Ebenso kann das Ausbringen von Viehfutter an verschiedene Viehgruppen mit hoher Präzision und ohne zeitliche Verzögerungen stattfinden. Dies erleichtert nicht nur die Arbeit des Landwirts, sondern verbessert auch das Zucht- bzw. Erzeugerergebnis.

## Patentansprüche

1. Futtermischwagen (100), mit:
wenigstens einem Laderaum (110) für landwirtschaftliche Schüttgüter;
mehreren Wiegevorrichtungen (1a-c, 21, 21a-c), insbesondere Wägezellen und/oder Wiegestäben, zum Erfassen des Gewichts von Ladegut in dem Laderaum;
wenigstens einer inertialen Messeinheit (6, 12, 22) zum Messen einer Beschleunigung und/oder Orientierung des Futtermischwagens, insbesondere des Laderaums, wobei die wenigstens eine inertiale Messeinheit (6, 12, 22) im Bereich des Schwerpunktes des Futtermischwagens (100) und/oder an einer Achse (130a, 130b) des Futtermischwagens (100) und/oder an einer Anhängevorrichtung (120) angeordnet ist; und
einer Recheneinheit (7, 8, 11, 14, 16), die dazu ausgebildet ist, mehrere Rohsignale mehrerer der Wiegevorrichtungen mit den Ausgangssignalen der wenigstens einen inertialen Messeinheit zu kombinieren, um verfälschende Einflüsse auf die gemessenen Gewichtssignale durch Beschleunigungen, Schwingungen und Neigungen des Futtermischwagens zu kompensieren.

2. Futtermischwagen (100) nach Anspruch 1, wobei jeder Wiegevorrichtung (21, 21a-c) eine separate inertiale Messeinheit (22) zugeordnet ist, die dazu ausgebildet ist, das Rohsignal dieser Wiegevorrichtung zu kompensieren.

3. Futtermischwagen (100) nach Anspruch 2, wobei die inertiale Messeinheit (22) in die Wiegevorrichtung (21, 21a-c) integriert ist, und wobei insbesondere die Recheneinheit der inertialen Messeinheit konfigurierbar ausgebildet ist, um das Rohsignal der Wiegevorrichtung in Abhängigkeit von einer Position der Wiegevorrichtung am Futtermischwagen (100) zu kompensieren.

4. Futtermischwagen (100) nach einem der vorhergehenden Ansprüche, weiterhin einen Wiegecomputer (8) umfassend, der dazu ausgebildet ist, die kompensierten Rohsignale der wenigstens einen Wiegevorrichtung (1a-c, 21, 21a-c) zu einem Gesamtgewicht des Ladeguts in dem Laderaum (110) zu verarbeiten.

5. Futtermischwagen (100) nach Anspruch 4, wobei der Wiegecomputer (8) dazu ausgebildet ist, einen Filter, insbesondere einen Glättungsfilter oder einen Tiefpassfilter, auf die kompensierten Rohsignale anzuwenden.

6. Futtermischwagen (100) nach Anspruch 4 oder 5, wobei der Wiegecomputer (8) ein drahtloses Kommunikationsmodul, insbesondere ein Bluetooth-Modul oder ein WiFi-Modul, für eine drahtlose Kommunikation mit einem Software-as-a-Service (SaaS) Anbieter und/oder einem mobilen Telekommunikationsendgerät aufweist.

7. Futtermischwagen (100) nach einem der vorhergehenden Ansprüche, wobei die inertiale Messeinheit (6, 12, 22), insbesondere die integrierte Recheneinheit, eine beschreibbare Speichereinheit zum Speichern von Software aufweist.

8. Futtermischwagen (100) nach einem der vorhergehenden Ansprüche mit wenigstens einem Mischbehälter als Laderaum (110) für Futter als Ladegut.

9. Futtermischwagen (100) nach Anspruch 8 in Kombination mit einem der Ansprüche 3 bis 6, wobei der Wiegecomputer (8) ferner dazu ausgebildet ist, ein vorprogrammiertes oder automatisches Beladen des wenigstens einen Mischbehälters durch eine oder mehrere Ladeöffnungen und/oder ein vorprogrammiertes oder automatisches Entladen des wenigstens einen Mischbehälters durch eine oder mehrere Ausbringöffnungen, insbesondere in Abhängigkeit von einer Rezeptur für das Futter, zu steuern.

## Claims

1. A feed mixer wagon (100), comprising:
at least one loading space (110) for bulk agricultural materials;
a plurality of weighing devices (1a-c, 21, 21a-c), in particular load cells and/or weigh beams, for detecting the weight of load in the loading space;
at least one inertial measuring unit (6, 12, 22) for measuring an acceleration and/or orientation of the feed mixer wagon, in particular of the loading space, the at least one inertial measuring unit (6, 12, 22) being disposed in the region of the center of gravity of the feed mixer wagon (100) and/or on an axle (130a, 130b) of the feed mixer wagon (100) and/or on a tow hitch (120); and
a computing unit (7, 8, 11, 14, 16) adapted to combine a plurality of raw signals from a plurality of the weighing devices with the output signals from the at least one inertial measuring unit to compensate for distorting influences on the measured weight signals due to accelerations, vibrations and inclinations of the feed mixer wagon.

2. The feed mixer wagon (100) according to claim 1, wherein each weighing device (21, 21 a-c) is associated with a separate inertial measuring unit (22) adapted to compensate for the raw signal from that weighing device.

3. The feed mixer wagon (100) according to claim 2, wherein the inertial measuring unit (22) is integrated into the weighing device (21, 21 a-c), and wherein in particular the computing unit of the inertial measuring unit is adapted to be configurable in order to compensate for the raw signal of the weighing device considering a location of the weighing device on the feed mixer wagon (100).

4. The feed mixer wagon (100) according to any one of the preceding claims, further comprising a weighing computer (8) adapted to process the compensated raw signals from the at least one weighing device (1a-c, 21, 21a-c) into a total weight of the load in the loading space (110).

5. The feed mixer wagon (100) according to claim 4, wherein the weighing computer (8) is adapted to apply a filter, in particular a smoothing filter or a low-pass filter, to the compensated raw signals.

6. The feed mixer wagon (100) according to claim 4 or 5, wherein the weighing computer (8) is provided with a wireless communication module, in particular a Bluetooth module or a WiFi module, for wireless communication with a provider of software-as-a-service (SaaS) and/or a mobile telecommunications terminal.

7. The feed mixer wagon (100) according to any one of the preceding claims, wherein the inertial measuring unit (6, 12, 22), in particular the integrated computing unit, has a writable memory unit for storing software.

8. The feed mixer wagon (100) according to any one of the preceding claims, including at least one mixing container as a loading space (110) for feed as a load.

9. The feed mixer wagon (100) according to claim 8 in combination with any one of claims 3 to 6, wherein the weighing computer (8) is further adapted to control pre-programmed or automatic loading of the at least one mixing container through one or more loading openings and/or a pre-programmed or automatic unloading of the at least one mixing container through one or more discharge openings, in particular considering a recipe for the feed.

## Revendications

1. Mélangeuse de fourrage (100), comprenant :
au moins un espace de chargement (110) pour des produits agricoles en vrac ; plusieurs dispositifs de pesage (1a-c, 21, 21a-c), en particulier des cellules de charge et/ou des barres de pesage, pour détecter le poids de la charge dans l'espace de chargement ;
au moins une unité de mesure inertielle (6, 12, 22) pour mesurer une accélération et/ou une orientation de la mélangeuse de fourrage, en particulier de l'espace de chargement, dans laquelle la au moins une unité de mesure inertielle (6, 12, 22) est agencée dans la zone du centre de gravité de la mélangeuse de fourrage (100) et/ou au niveau d'un axe (130a, 130b) de la mélangeuse de fourrage (100) et/ou au niveau d'un dispositif d'attelage (120) ; et
une unité de calcul (7, 8, 11, 14, 16) qui est conçue pour combiner plusieurs signaux bruts de plusieurs des dispositifs de pesage avec les signaux de sortie de la au moins une unité de mesure inertielle afin de compenser des influences perturbatrices sur les signaux de poids mesurés via des accélérations, des oscillations et des inclinaisons de la mélangeuse de fourrage.

2. Mélangeuse de fourrage (100) selon la revendication 1, dans laquelle chaque dispositif de pesage (21, 21a-c) est associé à une unité de mesure inertielle (22) séparée conçue pour compenser le signal brut de ce dispositif de pesage.

3. Mélangeuse de fourrage (100) selon la revendication 2, dans laquelle l'unité de mesure inertielle (22) est intégrée dans le dispositif de pesage (21, 21a-c), et dans laquelle en particulier l'unité de calcul de l'unité de mesure inertielle peut être configurée pour compenser le signal brut du dispositif de pesage en fonction d'une position du dispositif de pesage sur la mélangeuse de fourrage (100).

4. Mélangeuse de fourrage (100) selon l'une quelconque des revendications précédentes, comprenant en outre un ordinateur de pesage (8) qui est conçu pour transformer les signaux bruts compensés du au moins un dispositif de pesage (1a-c, 21, 21a-c) en un poids total de la charge dans l'espace de chargement (110).

5. Mélangeuse de fourrage (100) selon la revendication 4, dans laquelle l'ordinateur de pesage (8) est conçu pour appliquer un filtre, en particulier un filtre de lissage ou un filtre passe-bas, aux signaux bruts compensés.

6. Mélangeuse de fourrage (100) selon la revendication 4 ou 5, dans laquelle l'ordinateur de pesage (8) présente un module de communication sans fil, en particulier un module Bluetooth ou un module WiFi, pour une communication sans fil avec un fournisseur de logiciel en tant que service (SaaS) et/ou un terminal de télécommunication mobile.

7. Mélangeuse de fourrage (100) selon l'une quelconque des revendications précédentes, dans laquelle l'unité de mesure inertielle (6, 12, 22), en particulier l'unité de calcul intégrée, présente une unité de mémoire enregistrable pour le stockage de logiciels.

8. Mélangeuse de fourrage (100) selon l'une quelconque des revendications précédentes, comprenant au moins un contenant de mélange en tant qu'espace de chargement (110) pour du fourrage en tant que charge.

9. Mélangeuse de fourrage (100) selon la revendication 8 en combinaison avec l'une des revendications 3 à 6, dans laquelle l'ordinateur de pesage (8) est en outre conçu pour commander un chargement préprogrammé ou automatique du au moins un contenant de mélange à travers une ou plusieurs ouvertures de chargement et/ou un déchargement préprogrammé ou automatique du au moins un contenant de mélange à travers une ou plusieurs ouvertures d'évacuation, en particulier en fonction d'une recette pour le fourrage.
